# EUROPEAN PATENT APPLICATION

(11) **EP 1 922 964 A1**
(43) Date of publication of application: **21.05.2008**
(21) Application number: 07022540.4
(22) Date of filing: 03.05.2004
(51) Int. Cl.: A47J 37/04, F24C 14/00

(54) **Rotisserie oven and hood**

(30) Priority: 02.05.2003 US 428796; 02.05.2003 US 467518 P
(62) Divisional of application: 04751119.1
(71) Applicant: Alto-Shaam, Inc., Menomonee Falls, WI 53052-0450 (US)
(72) Inventor: Swank, Philip D., Greeley, Colorado 80634 (US); Insisiengmay, Philip C., Waukesha, WI 53188 (US); Farchione, David, Jackson, WI 53037 (US); Lemcke, Michael, Oak Creek, WI 53154 (US); Rehm, Erich B., West Bend, WI 53095 (US); Hansen, William J., Pewaukee, WI 53072 (US)
(74) Representative: Grünberg, Thomas

(57) **Abstract**

Rotisserie oven (320) comprising: a radiating heating system (364); a rotating spit assembly (352); and a hood assembly (400) defining a filtration chamber (412) housing two filtration members (422,436) through which the grease-laden air from cooking flows into the ambient via the hood outlet (456).

## Description

### CROSS-REFERENCE TO RELATED APPLICATIONS

This is a continuation-in-part of U.S. Patent Application No. 10/428,796 filed May 2, 2003, which is a continuation-in-part of U.S. Patent Application No. 10/078,845, filed February 19,2002, now issued as U.S. Patent No. 6,608,288, the disclosures of each of which are hereby incorporated by reference as if set forth in their entirety herein. This further claims priority to U.S. Provisional Patent Application 60/467,518, filed May 2, 2003, the disclosure of which is hereby incorporated by reference as if set forth in its entirety herein.

### BACKGROUND OF THE INVENTION

I.

The present invention relates generally to cooking apparatuses, and in particular to rotisserie ovens.

Rotisserie ovens are traditionally used to cook raw meat and poultry product, such as chicken, duck, and the like in side a cooking chamber. In particular, the food product to be prepared is carried by a rotating spit assembly that brings the food product into communication with a radiating heat source that cooks, and in some cases browns the outer surface of, the food product.

Unfortunately, conventional rotisserie ovens suffer from several drawbacks. For instance, if the door to the cooking chamber is not sufficiently sealed, flavorful gasses may escape from the oven. Furthermore, conventional ovens allow condensation to accumulate on the interior surface of the glass door, thereby inhibiting a user's ability to visually inspect the food without opening the door. Additionally, conventional spit assemblies are difficult to disassemble for cleaning purposes. Moreover, conventional ovens do not provide a user-friendly method for removing grease produced during cooking, and additionally fail to provide a user-friendly method and apparatus for cleaning the cooking chamber upon completion of a food preparation sequence.

It has thus become desirable to provide a rotisserie oven that overcomes these deficiencies, and that further improves upon existing rotisserie ovens.

II.

The present invention relates generally to rotisserie ovens, and in particular relates to a method and apparatus for providing an oven that need not be connected to the ductwork of a building, and hence is portable.

In most states in the United States, and in most countries, environmental regulations require that rotisserie ovens for cooking meat and poultry food product be located under a hood to vent smoke and moisture produced from the cooking process out of the building. In other locations without this requirement, the need to maintain air quality around the oven to an acceptable level is desired.

As a result, the need for a hood over the rotisserie oven requires that the oven be positioned in proximity to a hood that is in communication with the building ductwork, thus limiting the freedom to position the oven in high customer traffic areas. Moreover, rotisserie ovens are in some cases prevented from operating in other buildings, as a hood is expensive, and sometimes impossible, to install in a facility. Installations of such equipment must be U.L. listed in most instances in America and are controlled in other countries by corresponding regulating agencies. These disadvantages have limited the proliferation of rotisserie ovens, thereby reducing or eliminating sales of freshly cooked meat and poultry products (e.g., ribs, duck, turkey, chicken, and the like).

What is therefore needed is a cost-effective method and apparatus for mobilizing a rotisserie oven for use in virtually any desirable location without suffering from the prohibitive environmental drawbacks currently experienced.

### BRIEF SUMMARY OF THE INVENTION

I.

In accordance with one aspect of the invention, a rotisserie oven is provided for preparing cooked food product from a raw food product. The oven includes a cooking chamber defined by side walls joined at their outer ends to upper and lower walls. The cooking chamber defines at least one open end that is closed by a movable door assembly. A radiating heating system is disposed in the cooking chamber that receives electricity and produces radiating heat. A convection heat system is also disposed in the cooking chamber, and includes A) one ore more heating elements that produce heat in response to electricity, and B) a rotating fan that draws incoming air from the cooking chamber into the convection heat system, forces the air over the heating elements to become heated, and expels the heated air into the cooking chamber. The oven further includes a spit assembly including a pair of rotating discs rotatably attached proximal the side walls and carrying at least one spit configured to support a food product that is heated by the radiating heat source and the convection heat source.

II.

In accordance with one aspect of the invention, a rotisserie oven is provided for preparing cooked meat and poultry food product. The oven is of the type that includes a cooking chamber defined by side walls joined at their outer ends to upper and lower walls. The cooking chamber defining at least one open end closed by a movable door assembly. A radiating heating system is disposed in the cooking chamber and receives electricity to produce radiating heat. A spit assembly is provided that includes at least one spit configured to rotate within the cooking chamber while carrying a food product to be heated by the radiating heat source. The oven further includes a hood assembly including a housing supported by the cooking chamber. The housing defines a filtration chamber that receives incoming grease-laden air from the cooking chamber and houses at least one filtration member drawing the incoming air therethrough towards a hood outlet. The hood assembly and cooking chamber move together as the rotisserie oven travels from one location to another.

The foregoing and other aspects of the invention will appear from the following description. In the description, reference is made to the accompanying drawings which form a part hereof, and in which there is shown by way of illustration, and not limitation, a preferred embodiment of the invention. Such embodiment does not necessarily represent the full scope of the invention, however, and reference must therefore be made to the claims herein for interpreting the scope of the invention.

### BRIEF DESCRIPTION OF THE DRAWINGS

I.

Fig. 1 is a perspective view of a rotisserie oven stacked on top of a warming chamber in accordance with the preferred embodiment;

Fig. 2 is a perspective view of a motor that drives the spit assembly illustrated in Fig. 1;

Fig. 3 is a perspective view of a coupling that engages the motor illustrated in Fig. 2;

Fig. 4 is a perspective view of an inner surface of a support disc that is connected to the coupling illustrated in Fig. 3;

Fig. 5 is a perspective view of the outer surface of the support disc illustrated in Fig. 4;

Fig. 6A is a perspective view of a power transfer shaft having a driven end that engages the disc illustrated in Figs. 4 and 5;

Fig. 6B is a sectional side elevation view of the power transfer shaft illustrated in Fig. 6A having one connected end and a second disconnected end;

Fig. 7 is a perspective view of a portion of the cooking chamber illustrating a bearing that engages the power transfer shaft illustrated in Fig. 6;

Fig. 8 presents a pair of side elevation views of an angled spit that form a part of the preferred embodiment of the invention;

Fig. 9 is a perspective view of an assembled spit assembly having a plurality of angled spits and dual pronged spits mounted in accordance with a preferred embodiment of the invention;

Fig. 10 is a perspective view of the assembled spit assembly illustrated in Fig. 9 having a plurality of baskets mounted in accordance with a preferred embodiment of the invention;

Fig. 11 is an end elevation view of a drive assembly portion of the spit assembly constructed in accordance with an alternate embodiment of the invention.

Fig. 12 is a perspective view of the upper wall of the cooking chamber including a lighting system and radiating heating system;

Fig. 13 is a perspective view of the left side wall of the cooking chamber having a convection heating system in combination with a steam cleaning system;

Fig. 14 is a perspective view of a fan blade member used in combination with the convection heating system illustrated in Figs. 13;

Fig. 15 is a perspective view of the convection heating system illustrated in Fig. 13, but with the cover plate closed;

Fig. 16 is a perspective view of the left side of the oven housing including a reservoir constructed in accordance with an alternate embodiment;

Fig. 17 is a perspective view of a front door assembly of the oven;

Fig. 18 is a perspective view of a waste pan having a drainage valve constructed in accordance with a preferred embodiment of the invention, wherein the valve is in a closed position;

Fig. 19 is a schematic sectional side elevation view of a mechanical humidity control module constructed in accordance with an alternate embodiment of the invention;

II.

Fig. 20 is a front end view of a dedicated filtration hood mounted onto a rotisserie oven;

Fig. 21 is a perspective view of a spit assembly housed inside a cooking chamber of the oven illustrated in Fig. 20;

Fig. 22 is a perspective view inside the cooking chamber of the oven illustrated in Fig. 20;

Fig. 23 is a perspective view of a door assembly providing access to the cooking chamber of Fig. 22;

Fig. 24 is a sectional elevation view of the filtration hood illustrated in Fig. 20 including a pair of filtration members;

Fig. 25 is a perspective view of one of the filtration members illustrated in Fig. 24 engaging an activation switch;

Fig. 26 is a sectional side elevation view taken along line 26-26 of Fig. 21 illustrating the other filtration member before engaging an activation switch;

Fig. 27 is a schematic sectional side elevation view of the filtration member illustrated in Fig. 26 after engaging the activation switch;

Fig. 28 is a perspective view of the hood illustrated in Fig. 20 including a removable latch assembly engaging the front door of the rotisserie oven;

Fig. 29 is a sectional side elevation view of the latch assembly taken along the line 29-29 of Fig. 28;

Fig. 30 is a sectional side elevation view similar to Fig. 29, but with the front door slightly ajar and locked with respect to further opening by the latch assembly; and

Fig. 31 is a sectional side elevation view similar to Fig. 30, but with the latch assembly removed from engagement with the front door assembly, thereby permitting the door assembly to fully open.

### DETAILED DESCRIPTION OF THE PREFERRED EMBODIMENT

L

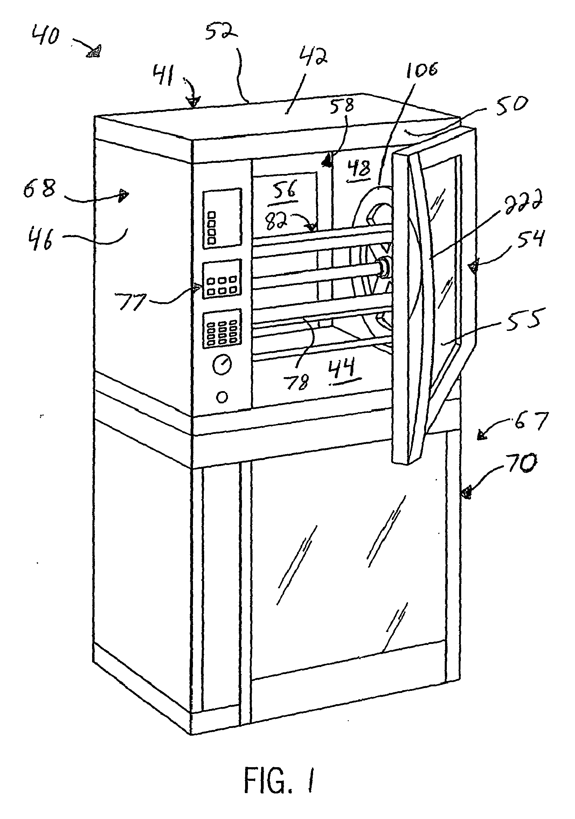

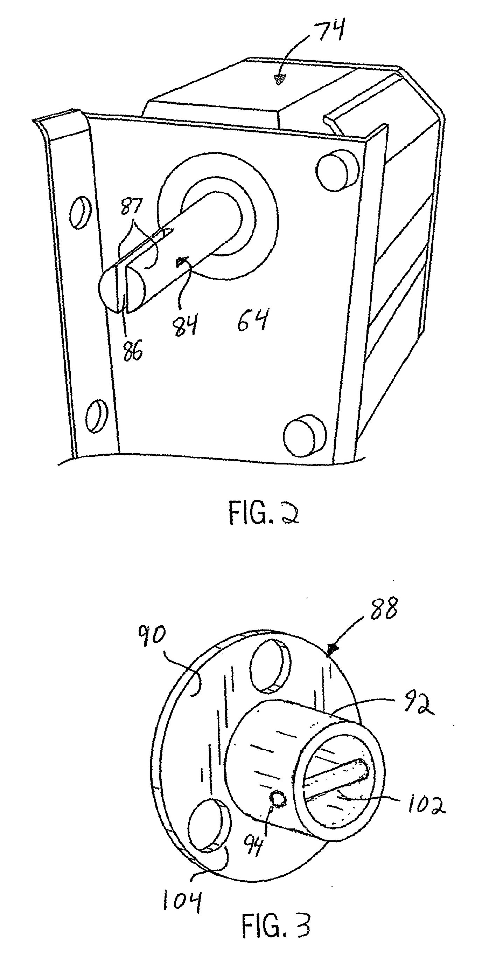

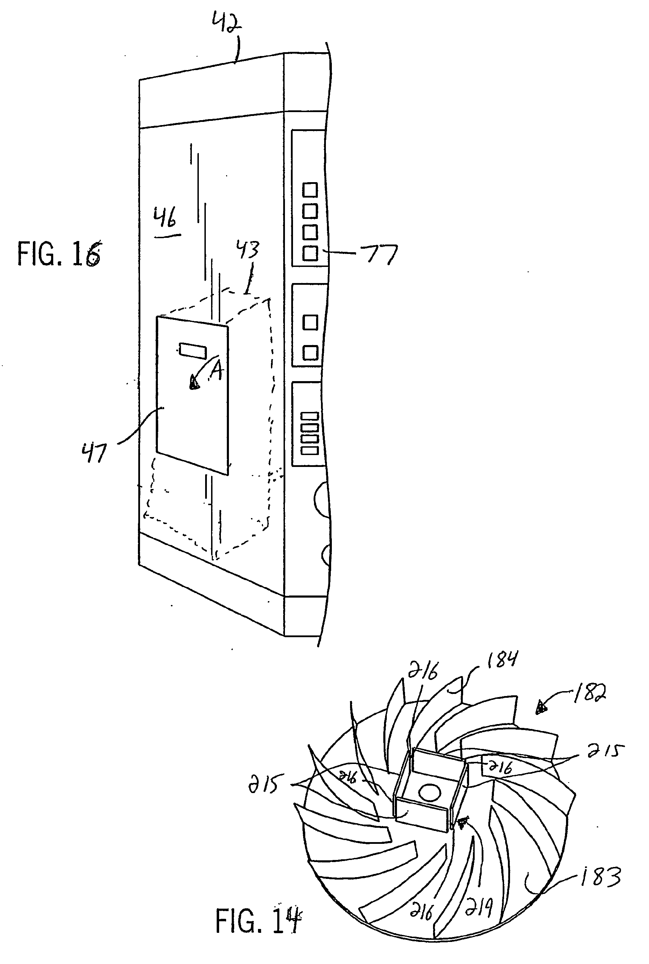

Referring initially to Fig. 1, a rotisserie oven 40 includes an outer housing 41 having upper and lower walls 42 and 44, respectively, opposing left and right side walls 46 and 48, respectively, and opposing front and rear walls 50 and 52 (shown in Fig. 2), respectively. A cooking chamber 58 is defined by upper and lower walls 42 and 44, right side wall 48, and a left side wall 64 (See Fig. 14).

Wall 64 is spaced from wall 46 that together define the lateral boundaries of a cabinet 68 that contains control components (e.g., a microprocessor, not shown, or other suitable controller) of oven 40. In particular, cabinet 68 houses a control assembly (not shown) that controls various aspects of the oven 40, such as temperature control, cooking sequences, and cleaning functions as is described in more detail below. Cabinet 68 further houses a motor 74 (See Fig. 2) that drives a spit assembly 82. Oven operation is controlled by an operator via a set of user controls and outputs 77 that are disposed on the front wall 50 of cabinet 68.

A front door assembly 54 is connected to the front wall 50, and a rear door assembly 56 is carried by the rear wall 52 that can both be opened and closed to provide access to cooking chamber 58. Front door assembly 54 includes a window assembly 55 that provides visible access to the cooking chamber 58, as will be described in more detail below. Rear door assembly 56 is preferably constructed in the manner described with respect to front door assembly 54. Oven 40 thus has a pass-through design as described in U.S. Patent No. 6,608,288, and thus may further be used in accordance with the methods described therein.

The rotisserie oven 40 can be mounted on top of a warming chamber 67 including a housing 70 of generally the same size and shape as housing 41, and an internal warming chamber (not shown) of generally the same size and shape of cooking chamber 58. Advantageously, the rotisserie oven 40 and warming chamber 67 may be stacked on top of each other. Ovens 40 and 72 are modular, such that oven 40 has rotisserie and/or convection heating components installed and warming chamber 72 may have a conductive heating systems installed that are configured to maintain the temperature of the food product that was prepared in the rotisserie oven. Oven 40 can alternatively be supported on, for instance, a kitchen floor directly via any suitable conventional a support assembly.

Spit assembly 82 includes a plurality of spits (collectively identified as 78) that span between side walls 46 and 48 of the cooking chamber 58. Specifically, spits 78 span between a pair of support discs 106 (one shown in Fig. 1) and are suitable for retaining meat product such as chicken, turkey, duck, and the like. Discs 106 are rotated under power supplied by motor 74 to correspondingly rotate the meat product with respect to a heat source.

Referring now to Fig. 2, motor 74 is mounted within cabinet, and includes an outwardly extending rotating output shaft 84. Shaft 84 extends through left side wall 64 of the cooking chamber 58. A groove 86 extends axially into the outer end of shaft 84, bifurcating the shaft to define a pair of engaging members 87. Motor 74 operates under electric power to rotate output shaft 86, including members 87. The speed of motor rotation can be set by the user via controls 77.

Referring to Fig. 3, a coupling 88 is provided for attachment to output shaft 84. Coupling 88 includes a cylindrical mounting plate 90 that includes a plurality (preferably three spaced 120° apart) apertures 104 extending axially therethrough. An annular shaft 92 extends outwardly from mounting plate 90 for connection to motor 74. A pair of aligned apertures 94 is formed through the outer end 96 of shaft 92. A dowel 102 having a thickness less than that of groove 86 is inserted into apertures 94. The inner diameter of shaft 92 is slightly greater than the outer diameter of output shaft 84 such that the output shaft 84 is received by shaft 92. When properly inserted, dowel 102 is inserted into groove 86 to interlock the coupling 88 with the output shaft 84. Accordingly, coupling 88 rotates along with output shaft 84 during operation. If desired, a second pair of apertures (not shown) could extend through shaft 92 spaced from apertures 94 that receive a second dowel to further engage members 87 of output shaft 84.

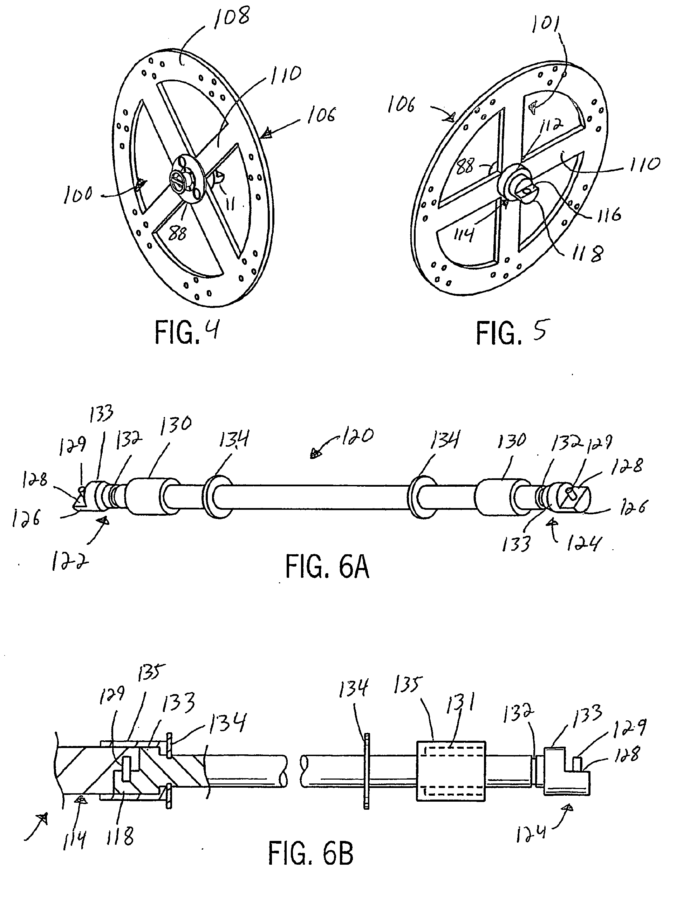

Referring now to Figs. 4 and 5, each support disc 106 includes an annular outer ring portion 108 and a pair of perpendicular ribs 110 that are connected at their outer ends to ring portion 108. Ribs 110 intersect at a centrally disposed hub 112, which is centrally disposed relative to disc 106. A pair of discs 106 are provided in accordance with the preferred embodiment, one of which being disposed at the drive end of the spit assembly 82, the other of which being disposed at the driven end of assembly 82.

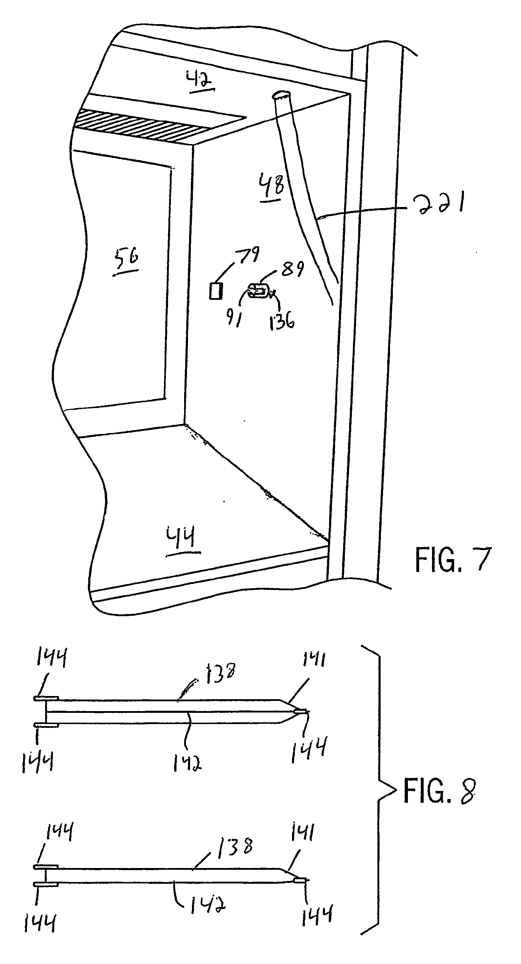

Fig. 4 illustrates an inner, coupling-engaging, face 100 of disc 106. In particular, coupling 88 is attached to surface 100 of hub 112 via screws, projections extending from hub 112, or the like, that extend through apertures 104.
Accordingly, once coupling 88 is attached to disc 106, dowel 102 faces outwardly and can engage motor 74 in the manner described above. Referring also to Fig. 7, a roller bearing 136 extends into the cooking chamber 58 from right side wall 48 in linear alignment with output shaft 84. Bearing 136 includes a shaft 89 defining a groove 91 in the manner with respect to output shaft 84. Accordingly, the second disc 106 is rotatably supported within chamber 58 via an attachment with bearing 136 in the manner described above with respect to coupling 88.

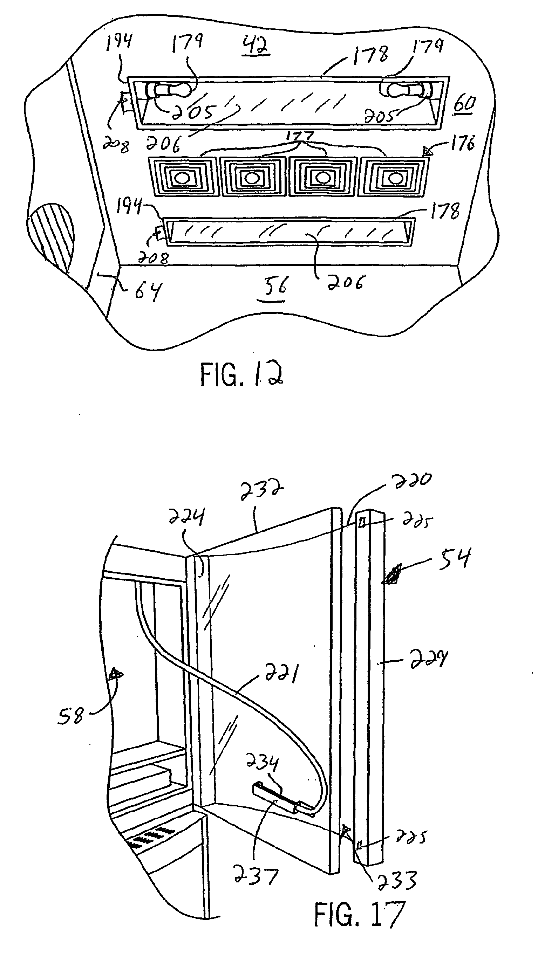

Fig. 7 further illustrates a temperature sensor 79 that is mounted onto the right side wall 48 for sensing the temperature in cooking chamber 58. The temperature can displayed at the user outputs 77. An electrical lead 221 is connected to the oven control system, extends into cooking chamber 58 from upper wall 42, and is connected at its outer end to a temperature probe (Fig. 12) as will be described in more detail below.

Referring now to Fig. 5 the outer, shaft-engaging, face 101 of each disc 106 is disposed opposite inner surface 100. A generally cylindrical connector member 114 extends outwardly from outer face 101 at hub 112. The outer end 118 of connector 114 is semi-cylindrical defines a flat engagement surface 116. An opening 117 extends into surface 116 in a direction perpendicular to surface 116.

Referring now to Figs. 6A and 6B, a power transfer shaft 120 is provided that is connected between discs 106. Shaft includes a first end 122 disposed proximal the motor, and a second end 124 opposite the first end 122 that is disposed proximal the right side wall 48 of cooking chamber 58. As illustrated in Fig. 6B, end 122 is illustrated as being connected while end 124 is illustrated as being disconnected to demonstrate operation of the components of shaft 120.

Each end 122 and 124 includes a semi-cylindrical connector 126 presenting a flange 133 defining a diameter greater than the diameter of shaft 120. Connector 126 further presents a flat engagement surface 128 downstream from flange 133. A pin 129 extends perpendicularly out from engagement surface 128 sized slightly less than the diameter of opening 117 formed in surface 116 of support disc 106. Engagement surface 128 is thus configured to mate with engagement surface 116 of support disc 106 as pin 129 is inserted into opening 117, thereby causing discs 106 to interlock with shaft 120 with respect to rotation.

A movable collar 135 is provided having an inner diameter sized to correspond to the diameter of shaft 120, and a counterbore 131 sized to correspond to the outer surface of the cylindrical joint formed between connector members 126 and 114. A washer 134 is provided at each end 122 and 124, and is disposed inwardly with respect to collar 135. During operation, once connector 126 is fastened to coupling 114, collar is slid over the resulting cylindrical joint to secure the connector 126 to the coupling 114. Flange 133 provides a stop for collar 135, thus ensuring that collar is properly positioned. When collar is fully engaged, a recess 132 circumferentially formed in shaft 120 is exposed. Washer 134 is slid into engagement with recess 132 to prevent connector 126 from sliding out of engagement with the joint during operation.

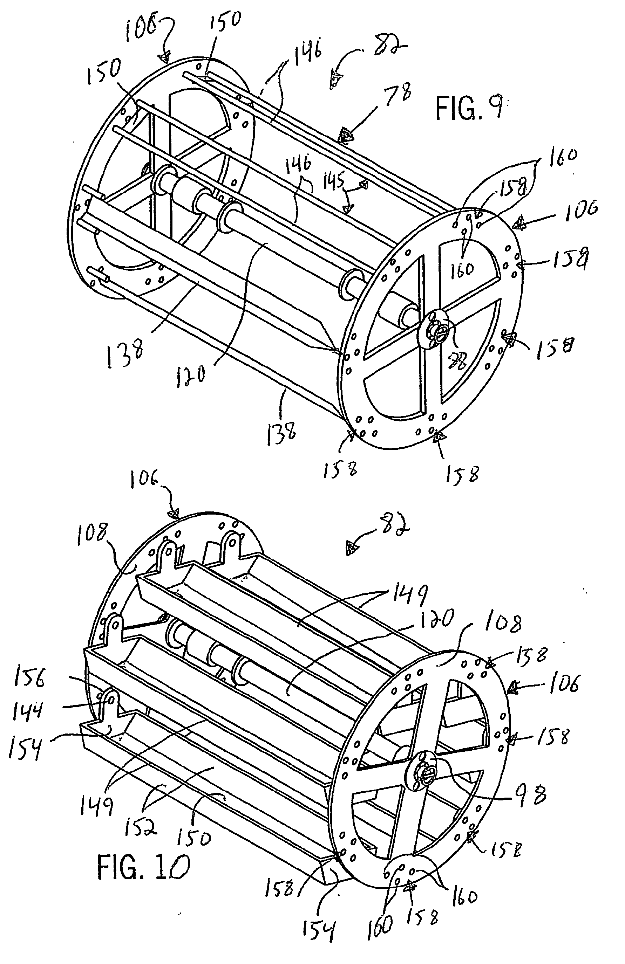

Referring also to Figs. 9 and 10 in particular, spit assembly 82 is assembled by mounting couplings 88 are first mounted onto hubs 112 of discs 106 as described above. The shaft portions 92 of couplings 88 are then connected to motor 74 and bearing 136, respectively. Shaft 120 is then installed, such that ends 122 and 124 are connected to the shaft connectors 114 located on support discs 106.
Accordingly, when motor 74 is operated, output shaft 84 rotates the connected disc 106 which, in turn rotates the power transfer shaft 120 which then causes rotation of the opposing disc 106 as permitted by bearing 136. The spit assembly 82 may be disassembled by reversing the assembly process, for instance when it is desired to clean the cooking chamber 58.

Referring now also to Fig. 8, the assembled spit assembly 82 is illustrated having various spits 78 connected between the rotating discs 106. In particular, a first angled spit 138 includes a pair of elongated axially extending flat walls 140 that join at an axially extending apex 142 to assume the general shape of an elongated bracket. Walls 140 define a pointed end 141 that is disposed at one end of spit 138. A mounting pin 144 extends outwardly from the pointed end 142. The other end of the spit 138 includes a pair of mounting pins 144 extending outwardly (one from each wall 140).

Referring to Fig. 9 in particular, a second dual-prong spit 145 includes a pair of cylindrical skewer rods 146 that are joined by a rib 150 at one end. Mounting pins 144 (not shown) extend outwardly from each end of each rod 146. The mounting pins disposed remote from rib 150 may be pointed to assist in piercing uncooked food product. The mounting pins of spit 146 are spaced the same distance apart as mounting pins 144 of spit 138.

Referring now to Fig. 10, a third spit is a basket 149 that includes an axially elongated base 150 integrally connected to opposing side walls 152 that are angled outwardly with respect to the base. A pair of opposing end walls 154 closes each basket 149. Food product (for instance, of the type that is not suitable to be easily skewered) can thus sit in baskets 149 during operation. A slot or plurality of slots (not shown) extends between the base 150 and side walls 152 to assist in the drainage of grease that is produced during the preparation of the food product. A mounting flange 156 extends upward from each end wall 154, and supports a mounting pin 144 that extends outwardly from the flange 156. Mounting pins 144 enable rotation of the corresponding spit 78. It should be appreciated that any of spits 78, 138, and 149 can be interchangeably attached to support discs 106 as desired to accommodate a given food product to be cooked. In this regard, it should be appreciated that "spit" as used herein refers to any apparatus configured to connect between discs 106 that is suitable to carry food product during a food preparation sequence.

Discs 106 define a plurality of spit mounting locations 158 circumferentially spaced about outer ring portion 108. Each mounting location 158 includes two pairs of apertures 160 designed to receive mounting pins 144. In particular, a first pair of apertures 160 includes first and second radially aligned apertures, respectively, while a second pair of apertures 160 includes tangentially aligned apertures.

The tangentially aligned apertures 160 are configured to receive mounting pins 144 of the dual-pronged ends of spits 138 and 146. Radially aligned apertures 160 are configured to receive mounting pins 144 of the single-pronged ends of spits 138 8 and 149. Advantageously, for larger food product, spit 13 8 may be orientated with the single mounting pin 144 of the pointed end 142 in the radially inner aperture 160 such that apex 144 points inwardly to position the food product away from the radiating heat elements, as will be described below. Alternatively, for smaller food product, mounting pin 144 of the pointed end 142 may be positioned in the radially inner aperture 162 such spit 138 is inverted and apex 142 faces outwardly, thereby positioning the food product closer to the radiating heat elements. Sufficient clearance exists such that one end of the spits 78 may be translated towards one of the discs 106 such that the mounting pin(s) 144 at the opposite end are removed from the corresponding disc 106. Accordingly, spits may be easily attached to and removed from assembly 82.

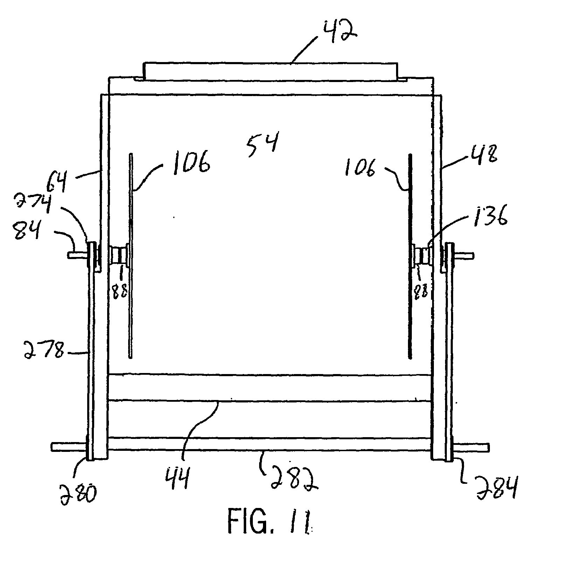

Referring to Fig. 11, the drive portion of a spit assembly 270 is illustrated in accordance with an alternate embodiment. Spit assembly 270 includes all components described above with respect to spit assembly 82 (unless otherwise mentioned), except assembly 270 does not require power transfer shaft 120 to extend through cooking chamber 54. As a result, additional space is preserved for food product that is to be prepared.

Instead, while discs 106 are coupled to output shaft 84 and bearing 136, respectively, in the manner described above, output shaft 84 includes a pulley 274 disposed outside of chamber 58. Pulley 274 supports a drive belt 278 that extends down to a pulley 280 mounted to the left end of a power transfer shaft 282 extending beneath lower wall 44. Pulleys 274 and 280 are vertically aligned. A second set of pulleys includes a pulley 284 connected to the right end of shaft 282 that is in vertical alignment with a pulley 285 extending through housing wall 48 and rotatably coupled to bearing 136 and, hence, the corresponding support disc 106. A driven belt 286 is connected between pulleys 284 and 285 such that rotation of shaft 282 causes disc 106 carried by the right side wall to rotate. Accordingly, both discs 106 (and remaining portions of spit assembly 270) are caused to rotate upon rotation of motor output shaft 84 without the need for a shaft to span between the discs 106 inside the cooking chamber 58.

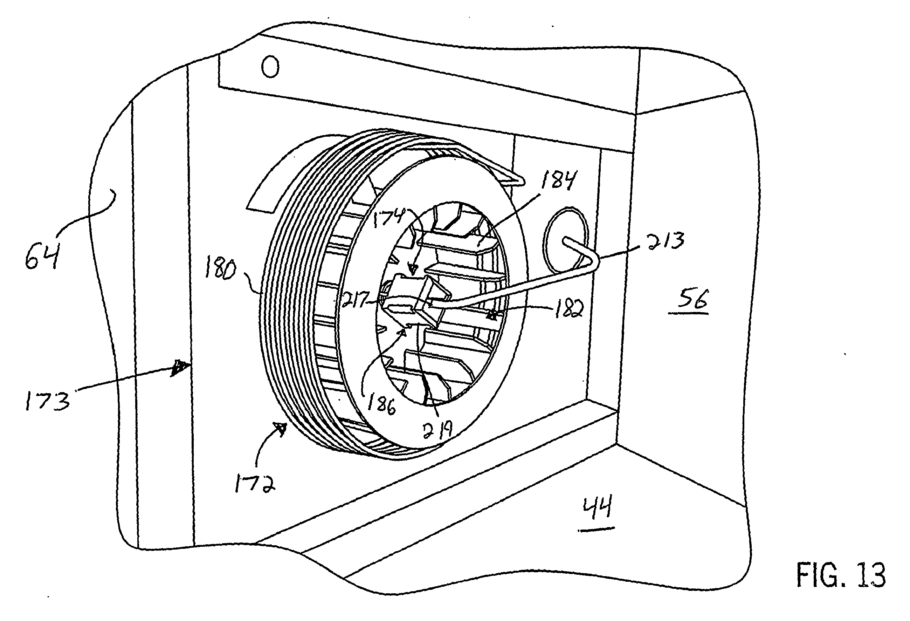

The various systems of oven 40 will now be described with initial reference to Figs. 13-15. In particular, a rectangular recess 173 is formed in side wall 64 that carries a convection heating system 172 and steam-producing cleaning system 174. In particular, heating system 172 includes a standard resistive coil 180 in the form of a loop that is connected to controller 77 and produces heat in response to an electrical input. A fan 182 is disposed inside the loop formed by the coil 180, and includes a circular plate 183 supporting a plurality of circumferential fan blades 184 that rotate about a hub 186 to draw air into heating system 172 from cooking chamber 58.

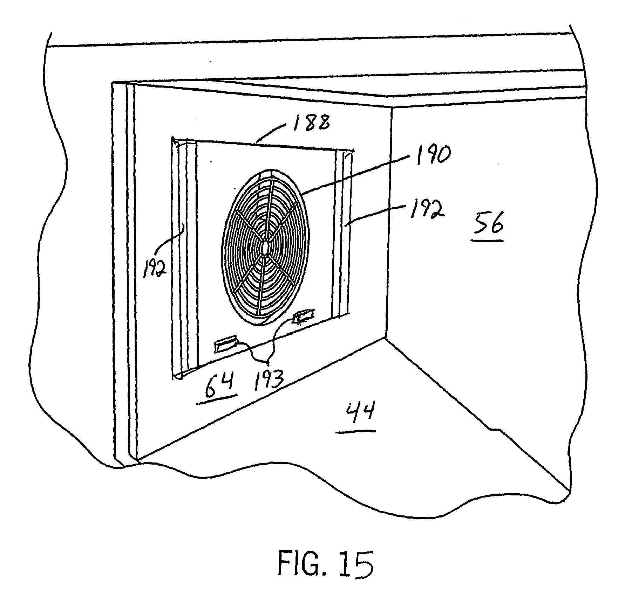

A cover 188 is hingedly mounted on the left side wall 64 and can be closed to the position illustrated in Fig. 15 to house convection heating system 172. A plurality of grooves 190 extend through the cover 188 and are substantially aligned with fan 182 to provide an air intake for the fan 182. Cover 188 does not span laterally the entire distance of recess 173 such that vertically extending gaps 192 are defined between cover 188 and left side wall 64 on both lateral sides of fan 182 to provide an air outlet for heated air. Horizontal vents 193 are also formed in cover 188 to provide additional air outlets. Accordingly, during operation, fan blades 184 rotate to draw air into the fan 182 via intake grooves 190. The air is expelled radially outwardly by the fan blades 184, thereby forcing the air to flow across resistive coil 180 before being expelled into the cooking chamber 58 via air outlet gaps 192 and 193 to heat the food product.

With continuing reference to Figs. 13-15, the present invention recognizes the difficulties associated in removing grease produced during a cooking sequence from the walls of the cooking chamber 58. Accordingly, a steam producing assembly 174 is provided that introduces steam into the cooking chamber 58 once a user initiates a cleaning cycle via user controls 77. In order to ensure that steam is not introduced into chamber 58 during the cooking cycle, oven 40 will prevent steam from being produced until the temperature in the cooking chamber 58 is below a predetermined threshold indicating the food product is no longer being cooked.

Steam assembly 174 includes a conduit 213 carrying water from a conventional water source (not shown). Conduit extends through left side wall 64, and preferably through recessed region 173. Conduit 213 defines a distal outlet end 217 that disposed at hub 186 of fan 182. In particular, outlet end 217 is disposed within a water distributor 219 that surrounds hub 186. Distributor 219 includes a plurality of side walls 215 that define an open outer end 214 that receives water from conduit 213. A slot 216 extends through the interface between adjacent side walls 215. Accordingly, water entering the distributor 219 via conduit 213 is "slung" through slots 216 as fan 182 rotates. The expelled water then contacts the heating coil 180 to produce steam that is emitted into the cooking chamber 58 via gaps 192 and 193 under forces from fan blades 184. It has been found that the introduction of steam into a chamber increases the efficiency of grease removal. During operation, cover 188 can be closed over conduit 213 as illustrated in Fig. 15.

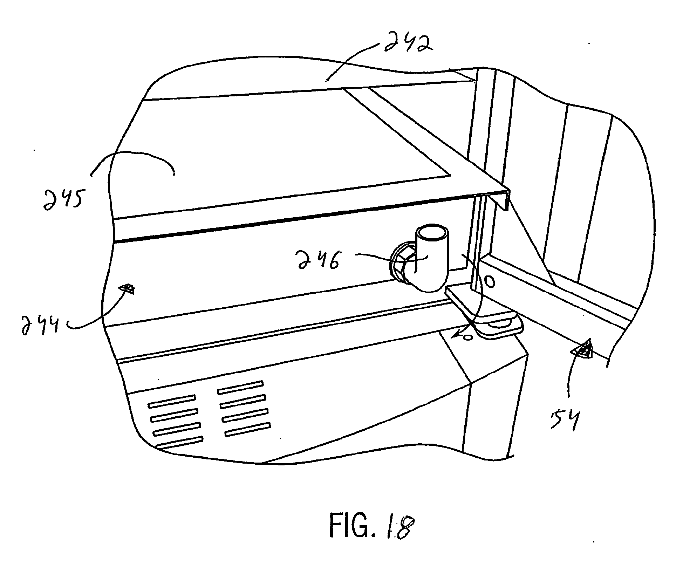

As discussed above, conduit 213 can receive water from a waterline (e.g., faucet). Alternatively, referring now to Fig. 16, conduit 213 can receive water from an internal tank 43 that is either located external to the oven 40, or mounted within cabinet 68. Tank 43 can be filled as needed when chamber 58 is to be steam cleaned. In particular, a hatch 47 is formed in left side wall 46 of housing 41 that may be opened in the direction of Arrow A. Water may be delivered into the hatch 47 to fill internal tank 43 that is connected to outlet 213. In this embodiment, water can be forced through conduit 213 via a pump (not shown) or, alternatively, conduit 43 can be connected to tank 43 in a desired manner to produce water pressure from the water stored in tank, thereby forcing water through conduit and into distributor 219.

Referring now to Fig. 12, oven 40 further includes a radiating heat system 176 that deliver radiating heat to food product carried by spit assembly 82.
Radiating heat system 176 is elongated in a direction between side walls 48 and 64 and is centrally disposed above spit assembly 82. The cooking chamber 58 thus advantageously incorporates a convection heat source 172 that is used to cook raw food product along with a radiation heat system 176 that browns the food being prepared.

Radiation heat system 176 includes a plurality of rectangular ceramic discs 177 having grooves that at least partially enclose traditional resistive coils. In particular, the bottom of the coil (when positioned as installed in the cooking chamber 58) is essentially coated with a ceramic material which has been found to emit infrared heat that is less scattered compared to coils that are not embedded in ceramic. The food product is thus browned more uniformly than conventionally achieved. The coils are connected via electrical leads to the control, and emit heat upon an electrical input. As described above, angled spit 138 may be positioned in the discs 106 in a desired orientation depending on the desired distance between heat system 176 and the outer surface of the food product.

Accordingly, heat is produced in response to the supply of electrical power to the coils, which is controlled via user inputs 77, in order to prepare food product rotating with spit assembly 82. Ceramic heaters 177 are preferably of the type commercially available from OGDEN Corp, located in Arlington Heights, IL or Chromalox, Inc. located in Pittsburgh, PA.

The present invention recognizes that the heating systems 172 and 176 are rated commercially for a predetermined wattage output, as it is desirable to ensure the consistency of the food preparation process. Because the oven 40 may be used worldwide in electrical receptacles that deliver electrical currents having varying input voltage levels, the control 77 senses the input voltage and delivers electrical pulses to the heating systems 172 and 176 to regulate the effective voltage that is applied to the heating systems. Increased input voltage levels will cause the controller to reduce the pulse frequency, and vice versa. Accordingly, a consistent desired wattage output of the heating systems is advantageously maintained. The pulses may either be delivered independently to each heating system 172 or 176. Alternatively, a combined pulse may be sent to both heating systems 172 and 176. Furthermore, controller 77 is connected to motor 74 of spit assembly 82 via a DC motor that pulses power to motor 74 in response to a user input on the user controls 77, thus enabling the user to regulate the speed of spit rotation.

A pair of lighting systems 178 are both disposed in the upper wall 42 of cooking chamber 58 to illuminate cooking chamber 58 on demand. Lighting systems are positioned such that radiating heat system 176 is centrally disposed between the pair of lighting systems 178. Lighting systems 178 extend between side walls 64 and 48 and parallel to radiating heat system 176. Each lighting system 178 is disposed in a rectangular recess 194 that is formed in the upper wall 60 of cooking chamber 58. A pair of opposing sockets 205 extends into the recess 194. Advantageously, sockets 205 receive standard Edison Socket style of light bulbs 179 as well as more expensive Halogen bulbs. The recess 194 is closed at its bottom via a glass cover 206 that is hingedly connected to the lower edge on of the recess walls, and fastened to an opposing side wall via a latch 208. Accordingly, the glass cover 206 may be opened and closed as desired when bulbs 179 are to be replaced. Lighting systems 178 can be activated upon opening either door 54 or 56, or alternatively can be controlled via user inputs 77.

Advantageously, the bulbs 179 are disposed above the radiation heat source 176, and are thus not exposed to direct infrared heating. Furthermore, the recess 194 and glass cover 206 shield the bulbs 179 from the convection heat source 172. Accordingly, the bulbs 179 are not as susceptible to breakage as conventional designs whose bulbs are placed in the cooking chamber in the direct path of heat from the heat source. Furthermore, when bulbs of conventional ovens break during a food preparation sequence, the bulb particles become scattered on the food, which must therefore be discarded. In accordance with the preferred embodiment, if bulbs 179 were to somehow break, cover 206 would prevent the remnants from entering the cooking chamber 58, thereby preserving the food being prepared.

Referring now to Fig. 17, front door assembly 54 includes an outer glass pane 220 that is bowed along a vertical axis away from cooking chamber 58. A door handle 222 (See Fig. 1) is connected to one end of the outer surface of glass member 220. Pane 220 is hingedly connected to oven via a vertical door frame member 224, and is further supported at its end opposite the hinged end via a second vertical door frame member 229. A second, flat, glass pane 232 is provided that is hingedly connected to door frame member 224, and is inwardly disposed with respect to pane 220. A gap 233 extends between panes 220 and 232 for heat dissipation during use. Glass panes 220 and 232 are permitted to rotate relative to chamber 48 and to each other, however panes 220 and 232 are generally coupled for rotation together, and are primarily decoupled when cleaning becomes necessary.

A plurality of magnets 225 is disposed in door frame 229. The magnets 225 are sensed at the housing 41 and communicated to the oven controller to automatically determine when the door 54 assembly is open. The magnets 225 further bond the door assembly 54 to the housing 41. A strip of silicon rubber or like sealant (not shown) can be applied to the front wall 50 of housing 41 around the opening to cooking chamber 58 in order to form a tight seal with the door assembly 54 to prevent leakage of flavored gasses from the cooking chamber 58.

As described above, insulated electrical wiring 221 is mounted at upper surface 42 within cooking chamber 58, and extends down towards door assembly.
A temperature probe 234 is connected to the distal end of wiring 221 and is supported by a bracket 237 mounted onto the inner surface of pane 232. Accordingly, when door assembly 54 is opened, a user can insert probe 234 into the food product being cooked to measure the temperature of the food product, which can be displayed at user output 77. In accordance with the preferred embodiment, the oven controller is programmed to automatically measure and display the temperature of the sensor 79 to display the temperature inside cooking chamber 58 until the door assembly 54 is opened, at which point the control will display the temperature of probe 234. Of course, the user may change these default settings if desired.

As noted above, rear door assembly 56 can be constructed in the manner described with reference to front door assembly 54.

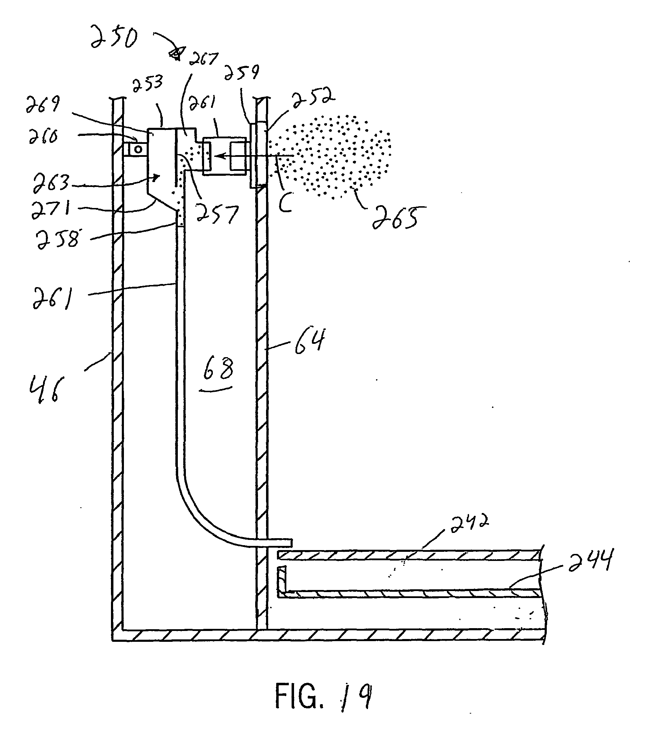

Referring now to Fig. 18, a drain pan 242 is be disposed above the base 62 of cooking chamber 58, and is angled downward along a direction into chamber 48 from both door assemblies 54 and 56. A groove (not shown) can extend axially at the apex of the drain pan 242 that enables grease to drain from the drain pan 242. A waste pan 244 is disposed between base 62 and the drain pan 242, and provides a receptacle 245 that receives grease and other cooking byproducts from the groove in drain pan 242. Waste pan 244 may be easily removed from and inserted into the void between base 62 and drain pan 242. Alternatively, waste pan 244 could include a trough at its base that in connected to a conduit which, in turn, connects to a proper grease disposal site.

A valve 246 is disposed in the front surface 248 of the waste pan 244 at a location towards the base. The valve 246 provides a conduit that extends outwardly from the waste pan 244 and upwardly when it is desired to store the contents in the waste pan. Once it is desired to drain the waste pan, the valve 246 is rotated downwardly in the direction of Arrow B, thereby enabling fluid to flow through the valve 246 and into a conduit or a portable receptacle (not shown) for the removal of grease. The base of waste pan 244 may be angled downward towards valve 246 to force fluid to flow into the valve. Alternatively, oven 40 may include a grease removal system of the type described in U.S. Provisional Patent Application Serial Number 60/464,681, and further files as a U.S. utility patent application April 22, 2004 entitled "Grease Collection System for Oven", the disclosure of which is hereby incorporated by references.

Referring now to Fig. 19, oven 40 may include a humidity regulating system 250 that reduces the humidity level inside cooking chamber 58 in order to reduce the accumulation of condensation on door assemblies 54 and 56. Humidity regulating system includes a vapor intake channel 252 extending through the upper end of left side wall 64 of cooking chamber 58. Intake channel 252 is connected to an adapter 259 disposed in cabinet 68 which, in turn, delivers incoming humid air 265 produced during cooking along the direction of Arrow C to a conduit 261 that flows into a condensing box 253. Condensing box 253 defines an internal reservoir 263 that receives air from conduit 261.

A baffle plate 257 extends down from the upper wall of condensing box 253, and separates reservoir 263 into an intake section 267 and a vacuum section 269. Baffle plate 257 does not extend entirely through to the bottom wall 271 of condensing box 253. Accordingly, vacuum section 269 is in fluid communication with intake section 267. Reservoir 263 defines a drain 255 extending through bottom wall 271, which is sloped towards drain 255 to directed condensed liquid into drain 255. Drain 255 is connected an outlet tube 258 that extends through side wall 64 and delivers fluid to drain pan 242 or, alternatively, directly into waste pan 244.

During operation, incoming air 265 flows into intake channel 252 and eventually into condensing box 253. The temperature of condensing box may be regulated using any conventional refrigeration or cooling system in order to ensure that the incoming steam condenses into a liquid inside condensing box 253. A blower 260 may be mounted to vacuum section 269 in order to draw air from the cooking chamber 58 into vacuum section 267. Advantageously, baffle plate 257 prevents the incoming air 265 from flowing directly into blower 260 prior to moisture removal. Instead, the moisture in the incoming air 265 condenses as the air travels down through intake section 267 before traveling up through vacuum section 269. Air 265 can also condense while traveling up in the vacuum section 269 prior to being expelled from the oven by blower 260. The condensed fluid flows down into drain 258, through conduit 258, and ultimately into drain pan 242 or waste pan. The oven control can also sense the humidity level inside cooking chamber 58 and adjust the speed of blower 60 accordingly in order to maintain a desired humidity level. The reduced humidity level reduces condensation from accumulating on doors 54 and 56, and hence provides the user with improved visible access to the food product being prepared.

In accordance with an alternative embodiment, blower 260 can be eliminated, and inlet 252 can be sized sufficiently large to ensure that steam produced during cooking will naturally flow into condensing box 253. Furthermore, inlet 252 may be sloped upwards so as to enable a greater amount of steam (which flows upwards in chamber 58) to enter the humidity control module 250.

II.

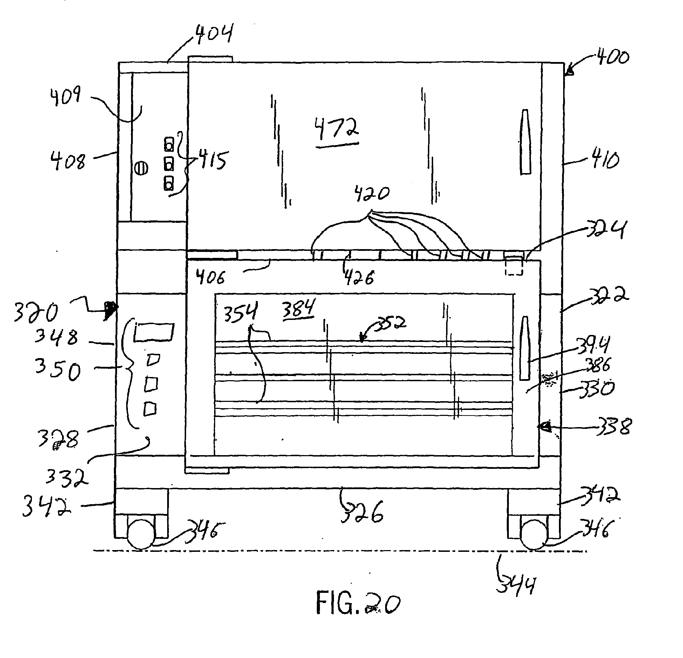

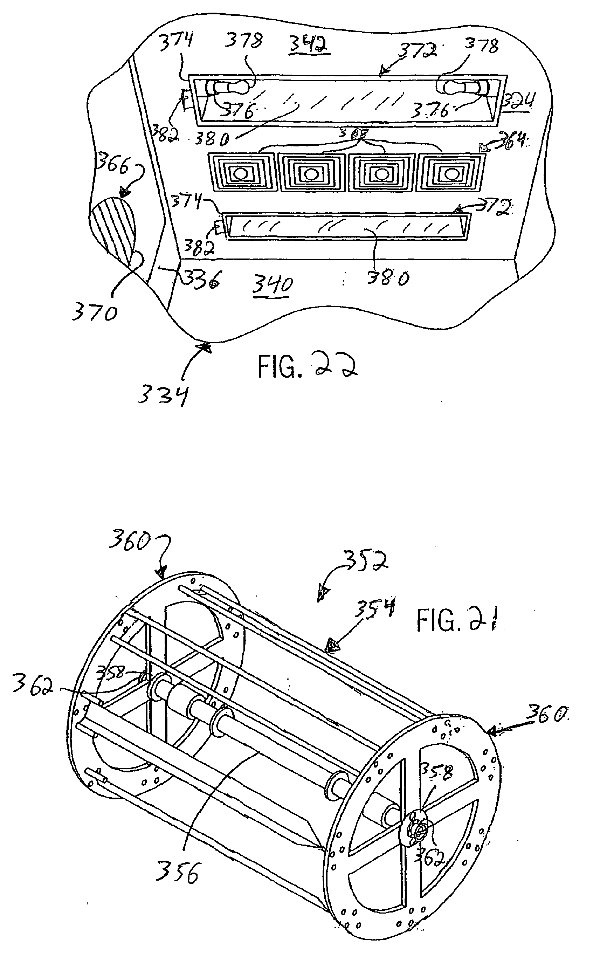

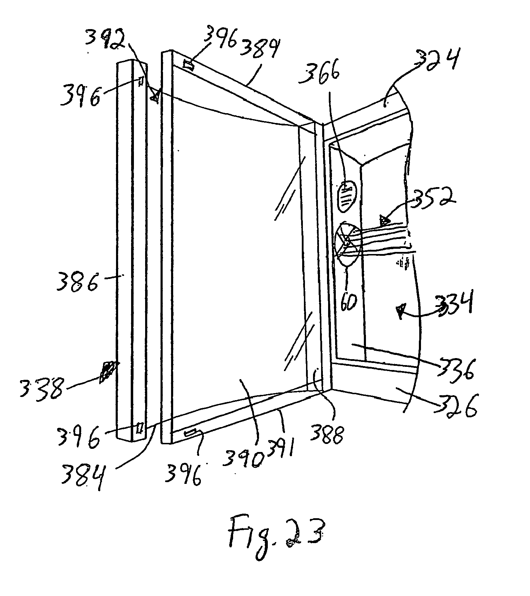

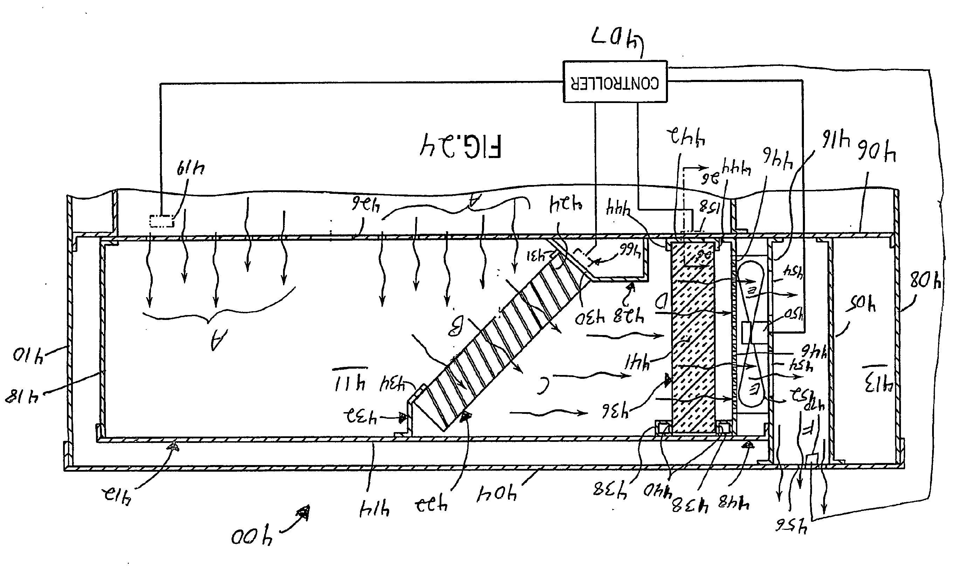

Referring initially to Figs. 20-22, a rotisserie oven 320 includes an outer housing 322 having upper and lower walls 324 and 326, respectively, opposing left and right side walls 328 and 330, respectively, and an opposing front wall 332 and rear wall (not shown). A cooking chamber 334 is defined inside oven 320 by upper and lower walls 324 and 326, right side wall 330, and a left side wall 336 spaced apart from, and parallel to, left side wall 328. A front door assembly 338 is connected to the front wall 332, and a rear door assembly 340 is carried by the rear wall that can both be opened and closed to provide access to cooking chamber 334. Each door assembly 338 and 340 is at least partially transparent to provide visual access to cooking chamber 334 when closed. Oven 320 is preferably supported by a plurality of legs 342 extending downwardly from each corner of lower wall 326 that engage the kitchen floor 344, or like support surface, via casters 346 to enable oven portability.

An oven cabinet 348 is contained in the void defined between side walls 328 and 336, and upper and lower walls 324 and 326 that houses an oven control 407 (e.g., a microprocessor or other suitable control module), as illustrated in Fig 24. A plurality of user-actuated inputs that control oven operation and outputs that display information related to oven operation (collectively identified as 350) are carried by front wall 332 at cabinet 348.

Cooking chamber 334 houses a spit assembly 352 including a plurality of spits (collectively identified as 354) connected between side walls 330 and 336. Specifically, a drive shaft 356 is connected between the hubs 358 of a pair of generally annular support discs 360 to rotatably fix each disc 360 with respect to the other. Spits 354 are connected between discs 360 and are suitable for carrying meat and poultry product such as chicken, turkey, duck, and the like, in the usual manner. Each disc 360 includes a connector 362 at the outer end of each hub 358, one of which engaging the output shaft of a drive motor (not shown) disposed in cabinet 348 and extending through side wall 336, and the other of which engaging a bearing (not shown) mounted onto side wall 330. Discs 360 and spits 354 are thus rotated in response to rotation of the motor output shaft.

Oven 320 produces heat within cooking chamber 334 using a radiation heat system 364 carried by upper wall 324, and furthermore by optionally using a convection heating system 366 carried by side wall 336.

Radiating heat system 364 delivers radiating heat to food product carried by spit assembly 352. Radiating heat system 364 is elongated in a direction between side walls 330 and 336 and is centrally disposed above spit assembly 352, and includes a plurality of rectangular ceramic disks 368 that are grooved to surround traditional resistive coils. In particular, the bottom of the coil (when positioned as installed in the cooking chamber 334) is essentially coated with a ceramic material which has been found to emit infrared heat that is less scattered compared to coils that are not embedded in ceramic. The food product is thus browned more uniformly than conventionally achieved. The coils are connected via electrical leads to the control, and emit heat upon an electrical input.

Accordingly, heat is produced in response to the supply of electrical power to the coils, which is controlled via user inputs 350, in order to prepare food product rotating with spit assembly 352. Ceramic heaters 368 are preferably of the type commercially available from OGDEN Corp, located in Arlington Heights, IL or Chromalox, Inc. located in Pittsburgh, PA.

Convection heating system 66 includes one or more standard resistive coils and fan positioned in a void (not shown) behind a perforated grill 370. The coils are of the conventional type that produces heat in response to an electrical input. During operation, the fan blades rotate to draw air into the void via grill 370, and expel the incoming air outwardly across the resistive coils to heat the air. The heated air is then directed into the oven chamber 334 through peripheral openings (not shown) in grill 370 to cook the food product carried by spit assembly 352.

The cooking chamber 334 thus advantageously incorporates a radiation heat system 364 that cooks and browns raw food product carried by spit assembly 328, and furthermore can include a convection heat source 366 to assist in cooking the food product.

A pair of lighting systems 372 is both disposed in the upper wall 342 of cooking chamber 334 to illuminate cooking chamber 334 on demand. Lighting systems 372 are positioned such that radiating heat system 364 is centrally disposed between the pair of lighting assemblies 372. Lighting assemblies 372 extend between side walls 336 and 330 and parallel to radiating heat system 364. Each lighting assembly 372 is disposed in a rectangular recess 374 that is formed in the upper wall 324 of cooking chamber 334. A pair of opposing sockets 376 extends into the recess 374. Advantageously, sockets 376 receive standard Edison Socket style of light bulbs 378 as well as more expensive Halogen bulbs. The recess 374 is closed at its bottom via a glass cover 380 that is hingedly connected to the lower edge on of the recess walls, and fastened to an opposing side wall via a latch 382. Accordingly, the glass cover 380 maybe opened and closed as desired when bulbs 378 are to be replaced. Lighting assemblies 372 can be activated automatically upon opening either door assembly, or alternatively can be controlled via user inputs 350.

Advantageously, the bulbs 378 are disposed above the radiation heat source 364, and are thus not exposed to direct infrared heating. Furthermore, the recess 374 and glass cover 380 shield the bulbs 378 from the convection heat source 366. Accordingly, the bulbs 378 are not as susceptible to breakage as conventional designs whose bulbs are placed in the cooking chamber in the direct path of heat from the heat source. Furthermore, when bulbs of conventional ovens break during a food preparation sequence, the bulb particles become scattered on the food, which must therefore be discarded. In accordance with the preferred embodiment, if bulbs 378 were to somehow break, cover 380 would prevent the remnants from entering the cooking chamber 334, thereby preserving the food being prepared.

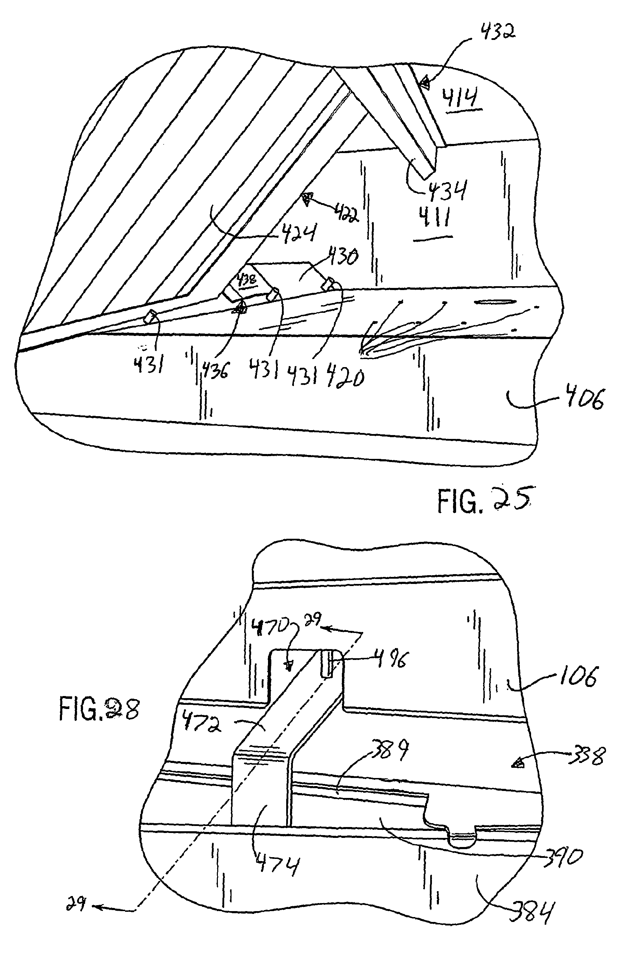

Referring now to Fig. 23, front door assembly 338 includes an outer glass pane 84 that is bowed away from cooking chamber 334 with respect to a vertical axis. A pair of vertical frame members 386 extends along the outer edges of glass pane 384. Pane 384 is hingedly connected to oven via vertical frame member 388, and further includes upper and lower horizontal frame members 389 and 391, respectively. A second, flat, glass pane 390 is provided that is hingedly connected to door frame member 388, and is inwardly disposed with respect to pane 384. A gap 392 is thus disposed between panes 384 and 390, and provides heat dissipation during use such that the bowed glass pane 384 is cool to the touch during use. A door handle 394 (See Fig. 20) is connected to the outer surface of vertical frame member 386. Glass panes 384 and 390 are permitted to rotate relative to chamber 334 and to each other, however panes 384 and 390 are generally coupled for rotation together, and are primarily decoupled when cleaning becomes necessary.

A plurality of magnets 396 is disposed in door frame 386, and in horizontal frame members 389 and 391. The magnets 396 engage front wall 332 to bond the door assembly 338 to housing 322, and can be sensed by corresponding magnets or the like that communicate with oven controller 407 to automatically determine when the door assembly 338 is open. In accordance with an alternate embodiment, only those magnets 396 carried by inner pane 390 are sensed. A strip of silicon rubber or like sealant 398 (see Figs. 29-31) can be applied to inner pane 390, or the front wall 332 of housing 322 around the opening to cooking chamber 334, in order to form a tight seal with the door assembly 338 to prevent leakage of flavored gasses from the cooking chamber 334 when door assembly 338 is closed.

Rear door assembly 340 can be supported by the rear wall of oven 320 in the manner described above with respect to front door assembly 338. Oven 320 thus has a pass-through design as described in U.S. Patent No. 6,608,288, and thus may further be used in accordance with the methods described therein.

Oven 320 is preferably of the type disclosed in a co-pending U.S. Patent Application No. 10/428,796 filed May 2, 2003 and the oven described in part I of this application, the disclosures of each which are hereby incorporated by reference as if set forth in their entirety herein. It should be appreciated, however, that the principles of the present invention are applicable to any rotisserie oven.

Referring now to Figs. 20 and 24, oven 40 includes a dedicated oven filtration hood 400 is mounted onto the upper surface of upper wall 342 that is configured to remove impurities from air exhausted from cooking chamber 334. Advantageously, hood 400 permits oven 340 to be positioned in virtually any desirable location without polluting the surrounding air with gasses produced during cooking.

Filtration hood 400 is generally defined by a housing 402 including upper and lower walls 404 and 406, respectively, opposing left and right side walls 408 and 410, respectively, and front and rear walls 409 and 411, respectively. Hood 410 includes a cabinet 413 defined by side wall 408, lower wall 406, upper wall 404, and a side wall 405 spaced apart from, and extending parallel to, side wall 408. Cabinet 413 can enclose controller 407 (schematically illustrated) which may be the same as, or different from the oven controller, and operates a stored program to control the various functions of hood 410 that will be described below. If operation of oven 320 and operation of hood 400 are controlled by two separate controllers, it would be desirable that the two controllers communicate to provide coordinated operation of oven 320 and hood 400, as will become apparent from the description below. Front wall 409 of cabinet 413 contains a plurality of user-actuated inputs and outputs (collectively identified as 415) in communication with controller 407.

Hood 410 further encloses a filtration chamber 412 defined by lower wall 406, an upper wall 414 that extends parallel to, and is spaced from, wall 404, a left side wall 416 that extends parallel to, and is spaced from, wall 408, and a right side wall 418 that extends parallel to, and is spaced from, wall 410. Lower wall 406 of filtration chamber 412 defines a plurality of vents 420 extending therethrough and into cooking chamber 334 such that, during a cooking operation, gasses vented from cooking chamber 334 flow substantially vertically upwards into filtration chamber 412 along the direction of Arrows A. A sensor 419 can be coupled to controller 107 to measure the rate that grease-laden air flows from cooking chamber 334 into filtration chamber 412.

Referring also to Fig. 25, a first filter 422 is supported inside filtration chamber 412 at an angle, and is located downstream of vents 420 with respect to airflow. Filter 422 is a baffle filter including a plurality of conventional metallic grates 424 that condense grease fumes and steam vapor when the air is brought into contact with the plates along the general direction of Arrows B. A drain 426 extends through lower wall 406 of filtration chamber for the drainage of moisture that is removed from the incoming air passing through filter 422. If desired, wall 406 can be sloped towards drain 426 to facilitate liquid removal.

Filter 422 is supported at its lower end by a lower bracket 428 extending up from lower wall 406. Bracket 428 includes an outer surface 430 that is angled with respect to lower wall 406 that directly supports the lower surface of filter 422. A plurality of flanges 431 extends out from surface 430 at a perpendicular angle, and supports the lower end of the upstream side wall of filter 422. An upper bracket 432 is attached to upper wall 414, and presents a surface 434 that is angled with respect to upper wall 414, and extends substantially perpendicular with respect to surface 430. Bracket surface 434 provides a seat for the upper end of the upstream side wall of filter 422. Brackets 428 and 432 extend between front wall 409 and rear wall 411 of chamber 412. Filter 422 is thus advantageously removably supported inside chamber 412 by brackets 428 and 432. It may be desirable to remove filter for cleaning purposes.

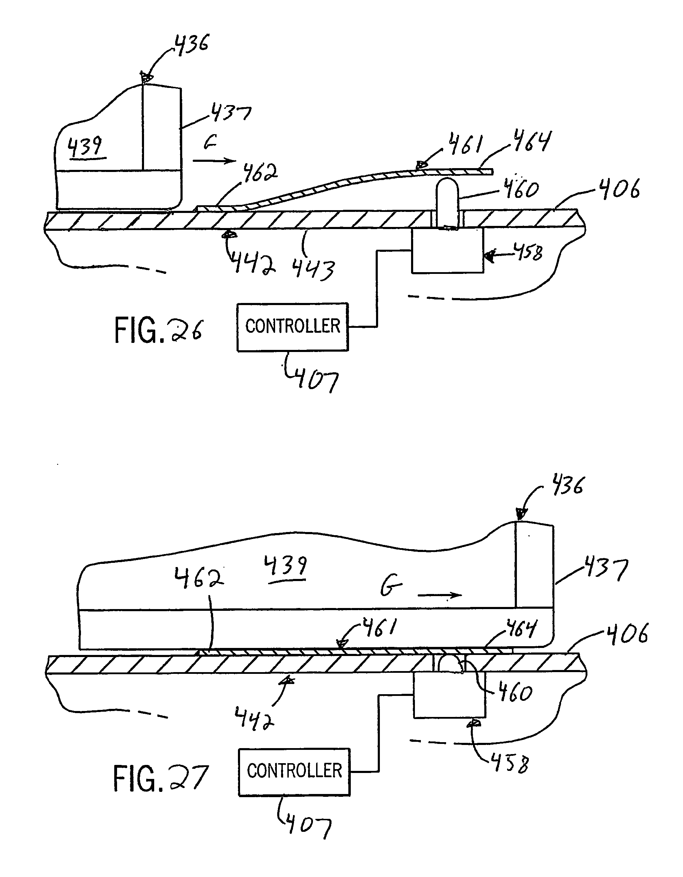

Referring now also to Fig. 26, a second filter 436 is disposed downstream from first filter 422, and extends perpendicularly between upper and lower walls 414 and 406. During operation, air passing through baffle filter 422 travels along the direction of Arrows C to second filter 436. Filter 436 includes an outer frame 437 that defines an open middle portion 439 containing any suitable filtration material 441, such as charcoal in accordance with the preferred embodiment. Air travels through filter 436 along the direction of Arrows D, and the filtration material removes impurities from the dehumidified air.

Filter 436 is supported in chamber 412 by a pair of upper brackets 438 is mounted onto upper wall 414, each of which defining an inner vertical support surface 440. Support surfaces 440 are spaced apart to define a gap substantially equal in size to (or slightly greater than) the thickness of filter 436. A lower bracket 442 is mounted onto lower wall 406, and defines a pair of vertical flanges 444 extending up from a horizontal support surface 443. Flanges 444 define therebetween a gap substantially equal in size to the gap defined by upper brackets 438. Brackets 438 and 442 extend between front wall 409 and rear wall 411. Filter 436 is thus advantageously removably supported inside chamber 412 between the gaps defined by upper and lower brackets 438 and 442, respectively. It may be desirable to remove filter 436, for instance, to replace the enclosed filtration material.

A partition 446 extends vertically between upper and lower walls 414 and 406, respectively, at a location downstream from second filter 436 and, in combination with wall 416, defines a fan housing 448. Housing 448 contains a fan 450 operably connected to controller 407. Partition 446 is either made from a porous material, or defines grooves extending therethrough such that rotation of fan blades 452 draws air into fan chamber 412 from cooking chamber 334 as described above. Fan 450 further expels the twice-filtered air from filtration chamber 411, through openings 454 formed in wall 416 along the direction of Arrows E, and out a vent 456 formed in upper housing wall 404 at a location between walls 405 and 416 along the direction of Arrows F.

Referring still to Fig. 26, controller 407 advantageously senses whether both filters 422 and 436 are installed in filtration chamber 412, and controls the operation of fan 450 accordingly. In particular, filter 436 is operably linked to a switch 458 having a depressible plunger 460 that is normally in an "up" position. A flexible (preferably metallic) plate 461 defines a first end 462 attached to the upper edge of surface 443, and a second end 464 downstream from first end 462 with respect to the direction of travel when filter 436 is inserted into filtration chamber 412 along the direction of Arrow G. Second end 464 of plate 461 extends up from surface 430 an amount substantially equal to the amount that plunger 461 protrudes up from surface 443. Accordingly, when filter 436 is not installed in chamber 412, switch 458 is open. Switch 458 is connected to controller 407, which senses the normally open position of switch 458 and determines that filter 436 is not installed in filtration chamber 412. Accordingly, controller 407 prevents operation of fan 450 when switch 458 is open.

Referring to Fig. 27, when filter is inserted into filtration chamber 412 along the direction of Arrow H, the bottom edge of frame 437 rides up over first end 462, and travels along plate 461 until depressing the downstream end 464 against plunger 460, thereby closing switch 458. Controller 407 senses the closed position of switch 458, and thus concludes that filter 436 has been installed. It should be appreciated that a pair of switches 458 could be provided proximal front and rear walls 409 and 411, such that controller 407 could determine whether or not filter 436 has been fully inserted in chamber 412.

Referring again to Fig. 24, baffle filter 422 likewise is operably linked to a normally open switch 466 constructed as described above, and engages a flexible plate (not shown) in the manner described above. Switch 466 is connected to controller 407, which determines whether both filters 422 and 436 have been installed. Controller 407 enables fan 450 to operate only when both switches 458 and 466 are closed, thereby indicating that both filters 422 and 436 have been installed in filtration chamber 412.

If controller 407 also controls operation of oven 320, controller 407 could enable operation of heating assemblies 364 and 366 only when filters 422 and 436 have been installed. Furthermore, an air flow rate sensor 470 can be positioned proximal vents 456 and coupled to controller 407 to determine the flow rate of filtered air out the hood 400. Controller 407 can prevent operation of heating assemblies 364 and 366 when the flow rate out of the hood 400 falls below a predetermine threshold indicating that either or both filters 422 and 436 have become clogged and require maintenance. Controller 407 could further compare the flow rate sensed at sensor 470 to that sensed at sensor 419 to determine whether either filter 422 and 436 are clogged. Furthermore, the reduced flow rate may be indicative of an open hood door 472 (which provides access to filtration chamber 412 along with a rear door, not shown). Alternatively, magnetic sensors of the type described with respect to oven 320 could be present on hood 400 to sense corresponding magnets carried by door 472, and coupled to controller 407 to directly sense when the hood door 472 is open and prevent operation of heating elements 364 and 366. In this manner, controller 407 prevents oven 320 from expelling unfiltered (or insufficiently filtered) air into the ambient environment.

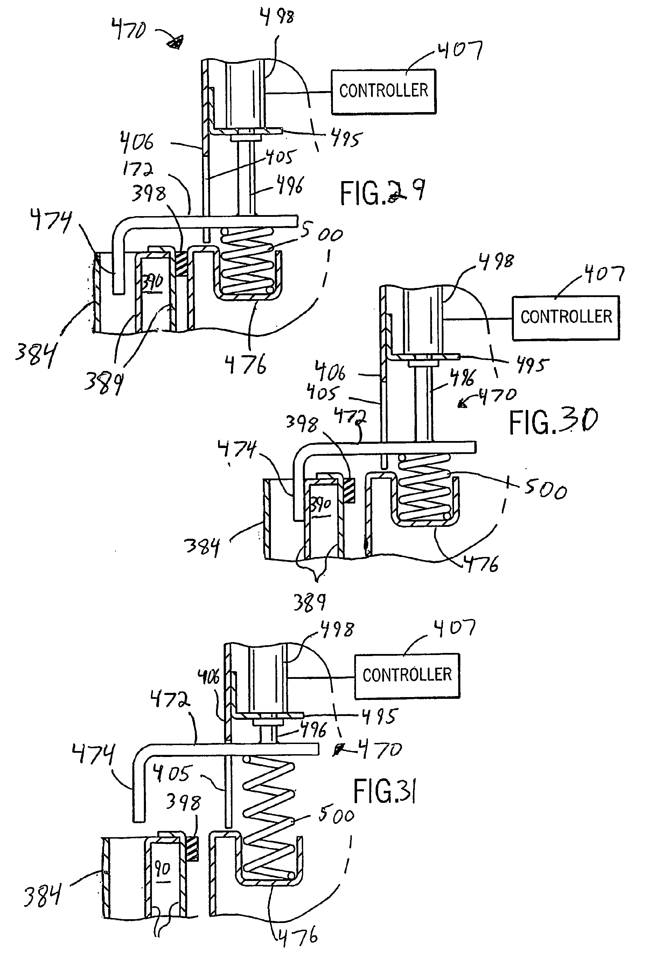

Referring now to Figs. 20, 28, and 29, hood 400 includes a door lock assembly 470 that, during operation, prevents the oven door assembly 338, and in particular the inner pane 390 from being immediately fully opened. It should be appreciated that hood could carry a similar door lock configured to engage the rear door assembly 340.

Door lock assembly 470 includes a plate 472 extending forwardly through an opening 405 formed in the front end of lower wall 406 at a location proximal handle 394 (i.e., the free end of door assembly 338). A flange 474 extends down from the forward end of plate 472. A spring 500 is seated in a cup-shaped retainer wall 476 disposed in lower wall 406 having an upper end engaging the bottom surface of plate 472, thus biasing plate 472 upwards. The vertical position of plate 472 is further controlled by a plunger 496 coupled to an actuator 498 which could, for instance, be a solenoid valve that is electrically connected to controller 407 and supported by an L-Bracket 495 extending from the lower end of front wall 409.

When door assembly 338 is closed, as indicated by controller 407 when sensing that inner pane 390 is closed, actuator 498 causes plunger 496 to bias plate 472 to a depressed position against the force of spring 500. When plunger 496 is in the depressed position, the lower end of flange 474 interferes with upper horizontal frame member 389.

Referring now to Fig. 30, flange 474 is spaced slightly forward with respect to frame member 389, such that door assembly 338 can be partially opened an amount equal to the offset between flange 474 and frame member 389, thereby permitting air to flow into cooking chamber 334 as soiled air travels from cooking chamber 334 to filtration chamber 412. Once controller 407 senses that door 338 has been opened, actuator 498 continues to depress plate 472 for a predetermined period of time until it is determined that the remaining grease-laden air disposed in cooking chamber 334 has been filtered and exhausted form hood. In accordance with the preferred embodiment, and depending on the minimum air flow rate through vent 456, door assembly 338 is prevented from opening past the position illustrated in Fig. 30 until the expiration of a lag time, for instance between ten and thirty (preferably twenty) seconds. Alternatively, the lag time can be calculated by controller 407 based on the amount of time necessary to replace the volume of soiled air inside cooking chamber with fresh ambient air as a function of the size of cooking chamber 334 and output flow rate as sensed by sensor 470.

Once the lag time has elapsed, actuator 498 removes the downward force on plunger 496, thereby enabling the force of spring 500 to bias plate 472 to its raised position, whereby the lower end of flange 474 is disposed entirely above horizontal frame member 389. Consequently, door assembly 338 is permitted to fully open such that the spit assembly 352 and corresponding cooked food product can be removed from cooking chamber 334. Once door assembly 338 is closed, during oven operation, actuator 498 again engages plunger 496 to depress plate 472 and prevent door 338 from being fully opened until the expiration of the predetermined period of time.

The above description has been that of the preferred embodiment of the present invention, and it will occur to those having ordinary skill in the art that many modifications may be made without departing from the spirit and scope of the invention.

The claims of the parent application are reproduced below on pages 29-37. These clauses define preferred embodiments. The applicant reserves the right to pursue protection for these preferred embodiments, and/or any other subject-matter contained in the parent application as filed, either in the present divisional application or in a further application divided from the present divisional application. The claims of the parent application are not the claims of the current application; the claims of the current application are contained on pages 38-41 and are headed "Claims".

### PREFERRED EMBODIMENTS

1. A rotisserie oven for preparing cooked food product from a raw food product, the oven comprising:
   a cooking chamber defined by side walls joined at their outer ends to upper and lower walls, the chamber defining at least one open end closed by a movable door assembly;
   a radiating heating system disposed in the cooking chamber that receives electricity and produces radiating heat;
   a convection heat system disposed in the cooking chamber, including:
      i. one or more heating elements that produce heat in response to electricity;
      ii. a rotating fan that draws incoming air from the cooking chamber into the convection heat system, forces the air over the heating elements to become heated, and expels the heated air into the cooking chamber; and
   a spit assembly including a pair of rotating discs rotatably attached proximal the side walls and carrying at least one spit configured to support a food product that is heated by the radiating heat source and the convection heat source.
2. The rotisserie oven as recited in claim 1, wherein the door assembly comprises an inner glass pane rotatably coupled to an outer glass pane that is bowed outwardly with respect to the inner glass pane to define a gap therebetween.
3. The rotisserie oven as recited in claim 2, further comprising a food temperature probe mounted onto an inner surface of the inner glass pane, wherein the probe can be inserted into the food product to measure the temperature thereof.
4. The rotisserie oven as recited in claim 3, wherein the probe temperature is automatically displayed when the door assembly is opened.
5. The rotisserie oven as recited in claim 4, further comprising a chamber temperature sensor mounted inside the chamber for measuring the chamber temperature that is automatically displayed when the door assembly is closed.
6. The rotisserie oven as recited in claim 2, further comprising a front and a rear door assembly.
7. The rotisserie oven as recited in claim 1, wherein the radiating heat source comprises at least one resistive coil in communication with a ceramic member that becomes heated by the coil.
8. The rotisserie oven as recited in claim 1, the spit assembly comprising:
   a motor having a rotating output shaft extending from one of the cooking chamber side walls;
   a first disc coupled to the output shaft and rotatably fixed thereto;
   a power transfer shaft coupled at a first end to the first disc and rotatably fixed thereto;
   a second disc coupled to a second end of the power transfer shaft opposite the first end and rotatably fixed thereto, the second disc being further rotatably coupled to the other cooking chamber side wall.
9. The rotisserie oven as recited in claim 8, the disc including a connector having an engagement surface that is coupled to an engagement surface of at least one end of the power transfer shaft to form a joint.
10. The rotisserie oven as recited in claim 9, wherein the at least one end carries a movable collar that covers the joint, and wherein the at least one end defines a recess disposed inwardly of the joint that carries a washer to prevent the collar from sliding out of engagement with the joint.
11. The rotisserie oven as recited in claim 1, the spit assembly comprising:
   a motor having a rotating output shaft extending therefrom;
   a first disc coupled to the output shaft and rotatably fixed thereto inside the cooking chamber at one of the side walls;
   a drive belt extending from the output shaft to a first end of a power transfer shaft located below the cooking chamber;
   a driven belt extending from a second end of the power transfer shaft to a location in communication with a second disc supported by the opposite side wall. coupled to the other cooking chamber side wall.
12. The rotisserie oven as recited in claim 1, further comprising a steam cleaning system including A) a distributor member defining an opening having a plurality of radial outlets, and B) a water supply source extending into the opening of the distributor; wherein water is directed to the rotating fan blades and across the heating elements to produce steam that is expelled into the cooking chamber.
13. The rotisserie oven as recited in claim 1, wherein steam cleaning system operation begins only when the temperature in the oven is below a predetermined threshold indicating that food product is not being cooked.
14. The rotisserie oven as recited in claim 1, further comprising a humidity control system including a condensing housing defining an interior that receives moist air from the cooking chamber, the interior having a temperature regulated to condense the moist air and produce a liquid.
15. The rotisserie oven as recited in claim 1, wherein the humidity control system further comprises a baffle plate bifurcating the interior into an intake section and a vacuum section, and a pump supplying a negative air pressure at the vacuum section to draw air into the housing from the cooking chamber at the intake section.
16. The rotisserie oven as recited in claim 15, further comprising an outlet from the housing at a location below the baffle plate.
17. The rotisserie oven as recited in claim 1, wherein the spit assembly carries an angled spit having first and second angular walls that join at an apex, the spit including members that attach the spit to the discs in one of two possible positions that adjust the distance between the apex and the radiating heat source.
18. A rotisserie oven for preparing cooked food product from a raw food product, the oven comprising:
   a cooking chamber defined by side walls joined at their outer ends to upper and lower walls, defining at least one opening closed by a movable door assembly;
   a radiating heating system disposed in the cooking chamber that receives electricity and produces radiating heat;
   a spit assembly including a pair of rotating discs rotatably attached proximal the side walls and carrying at least one spit configured to support a food product that is heated by the radiating heat source; and
   a steam cleaning system including
      i. one ore more heating elements that produce heat in response to electricity;
      ii. a rotating fan including a distributor having side walls that define openings surrounded by a plurality of fan blades;
      iii. a fluid supply source delivering a fluid to the distributor,
   wherein fan rotation forces the fluid through the openings and into communication with the one or more heating elements to produce steam that is exhausted into the cooking chamber.
19. The rotisserie oven as recited in claim 18, wherein the door assembly comprises an inner glass pane rotatably coupled to an outer glass pane that is bowed outwardly with respect to the inner glass pane.
20. The rotisserie oven as recited in claim 19, further comprising a food temperature probe mounted onto an inner surface of the inner glass pane, wherein the probe can be inserted into the food product to measure the temperature thereof.
21. The rotisserie oven as recited in claim 20, wherein the probe temperature is automatically displayed when the door assembly is opened.
22. The rotisserie oven as recited in claim 21, further comprising a chamber temperature sensor mounted inside the chamber for measuring the chamber temperature that is automatically displayed when the door assembly is closed.
23. The rotisserie oven as recited in claim 19, further comprising a front and a rear door assembly.
24. The rotisserie oven as recited in claim 18, wherein the radiating heat source comprises at least one resistive coil in communication with a ceramic member that becomes heated by the coil.
25. The rotisserie oven as recited in claim 18, the spit assembly comprising:
   a motor having a rotating output shaft extending from one of the cooking chamber side walls;
   a first disc coupled to the output shaft and rotatably fixed thereto;
   a power transfer shaft coupled at a first end to the first disc and rotatably fixed thereto;
   a second disc coupled to a second end of the power transfer shaft opposite the first end and rotatably fixed thereto, the second disc being further rotatably coupled to the other cooking chamber side wall.
26. The rotisserie oven as recited in claim 25, the disc including a connector having an engagement surface that is coupled to an engagement surface of at least one end of the power transfer shaft to form a joint.
27. The rotisserie oven as recited in claim 26, wherein the at least one end carries a movable collar that covers the joint, and wherein the at least one end defines a recess disposed inwardly of the joint that carries a washer to prevent the collar from sliding out of engagement with the joint.
28. The rotisserie oven as recited in claim 18, the spit assembly comprising:
   a motor having a rotating output shaft extending therefrom;
   a first disc coupled to the output shaft and rotatably fixed thereto inside the cooking chamber at one of the side walls;
   a drive belt extending from the output shaft to a first end of a power transfer shaft located below the cooking chamber;
   a driven belt extending from a second end of the power transfer shaft to a location in communication with a second disc supported by the opposite side wall. coupled to the other cooking chamber side wall.
29. The rotisserie oven as recited in claim 18, wherein steam cleaning system operation begins only when the temperature in the oven is below a predetermined threshold indicating that food product is not being cooked.
30. The rotisserie oven as recited in claim 18, further comprising a humidity control system including a condensing housing defining an interior that receives moist air from the cooking chamber, the interior having a temperature regulated to condense the moist air and produce a liquid.
31. The rotisserie oven as recited in claim 18, wherein the humidity control system further comprises a baffle plate bifurcating the interior into an intake section and a vacuum section, and a pump supplying a negative air pressure at the vacuum section to draw air into the housing from the cooking chamber at the intake section.
32. The rotisserie oven as recited in claim 31, further comprising an outlet from the housing at a location below the baffle plate.
33. The rotisserie oven as recited in claim 18, wherein the spit assembly carries an angled spit having first and second angular walls that join at an apex, the spit including members that attach the spit to the discs in one of two possible positions that adjust the distance between the apex and the radiating heat source.
34. A rotisserie oven for preparing cooked meat and poultry food product within an ambient environment, comprising:
   a cooking chamber defined by side walls joined at their upper and lower ends to upper and lower walls, the chamber defining at least one open end closed by a movable door assembly;
   a radiating heating system disposed in the cooking chamber receiving electricity to produces radiating heat;
   spit assembly including at least one spit configured to rotate within the cooking chamber while carrying a food product to be heated by the radiating heat source;
   a hood assembly including a housing supported by the cooking chamber, the hood assembly defining a filtration chamber that houses at least one filtration member;
   an inlet to the hood assembly from the cooking chamber providing a flow path for incoming grease-laden air from the cooking chamber into the hood assembly; and
   an outlet from the hood assembly into the ambient environment,
   wherein the grease-laden air flows through the filtration chamber to produce filtered air that exits the hood and flows into the ambient via the hood outlet.
35. The rotisserie oven as recited in claim 34, further comprising a switch operably coupled to the at least one filtration member that is open when the filtration member is removed from the filtration chamber, and closed when filtration member is installed in the filtration chamber.
36. The rotisserie oven as recited in claim 34, further comprising a fan drawing incoming air through the at least one filtration member.
37. The rotisserie oven as recited in claim 36, further comprising a controller that prevents at least one of the fan and the heating system from operating when the switch is open.
38. The rotisserie oven as recited in claim 7, further comprising an airflow sensor positioned proximal the hood outlet and coupled to the controller, wherein the controller prevents at least one of the fan and heating system from operating when the sensor indicates an exhaust airflow rate below a predetermined threshold.
39. The rotisserie oven as recited in claim 34, wherein the filtration member includes a charcoal filtration media.
40. The rotisserie oven as recited in claim 34, further comprising a second filtration member disposed upstream of the at least one filtration member.
41. The rotisserie oven as recited in claim 40, wherein the second filtration member comprises a baffle filter.
42. The rotisserie oven as recited in claim 34, further comprising a latch that interferes with the door assembly and permits the door assembly to be no more than partially opened for a predetermined period of time.
43. The rotisserie oven as recited in claim 42, wherein the interference between the latch and the door assembly is removed upon expiration of the predetermined period of time.
44. The rotisserie oven as recited in claim 34, further comprising a convection heating system introducing heat into the cooking chamber simultaneously with the radiating heat produced by the radiating heating system.
45. A method of operating a rotisserie oven of the type including A) a cooking chamber defined by side walls joined at their upper and lower ends to upper and lower walls, the chamber defining at least one open end closed by a movable door assembly, B) a radiating heating system disposed in the cooking chamber that receives electricity and produces radiating heat, and C) a spit assembly including at least one spit configured to support a food product, the steps comprising:
   (A) applying the radiating heat to cook the food product and produce grease-laden air;
   (B) drawing the grease-laden air from the cooking chamber into a filtration chamber of a hood that is supported by the cooking chamber;
   (C) operating an air mover to force the grease-laden air through at least one filter disposed in the filtration chamber; and
   (D) exhausting the filtered air from the filtration chamber into an ambient environment.
46. The method as recited in claim 45, further comprising sensing whether the filter is installed in the filtration chamber.
47. The method as recited in claim 46, further comprising the step of disengaging the air mover when the filter is not installed in the filtration chamber.
48. The method as recited in claim 46, further comprising performing step (C) only when the filter is installed in the filtration chamber.
49. The method as recited in claim 46, further comprising activating a switch with the filtration member when the filtration member is installed in the filtration chamber.
50. The method as recited in claim 45, further comprising sensing a flow rate of the exhausted air, and permitting operation of at least one the heating element and the air mover when the sensed flow rate reaches a predetermined minimum.
51. The method as recited in claim 45, further comprising allowing the door assembly to only partially open for a predetermined period of time.
52. The method as recited in claim 51, further comprising allowing the door assembly to fully open upon expiration of the period of time.
53. The method as recited in claim 45, further comprising cooking the food product via convection simultaneously with the radiated heat.

## Claims

1. A rotisserie oven (320) for preparing cooked meat and poultry food product within an ambient environment, comprising:
a cooking chamber (334) defined by side walls (328,330,332) joined at their upper and lower ends to upper and lower walls (324,326), the chamber (324) defining at least one open end closed by a movable door assembly (338);
a radiating heating system (364) disposed in the cooking chamber receiving electricity to produces radiating heat;
spit assembly (352) including at least one spit configured to rotate within the cooking chamber (334) while carrying a food product to be heated by the radiating heat source (364);
a hood assembly (400) including a housing supported by the cooking chamber (334), the hood assembly (400) defining a filtration chamber (412) that houses an upstream filtration member (422) and a downstream filtration member (436);
an inlet (420) to the hood assembly from the cooking chamber (334) providing a flow path for incoming grease-laden air from the cooking chamber (334) into the hood assembly (400); and
an outlet (456) from the hood assembly (400) into the ambient environment,
wherein the grease-laden air flows through the filtration chamber (412) to produce filtered air that exits the hood (400) and flows into the ambient via the hood outlet (456).

2. The rotisserie oven (320) as recited in claim 1, further comprising a switch (458,466) operably coupled to at least one of the upstream filtration member (422) and the downstream filtration member (436), the switch being open when the respective filtration member (422,436) is removed from the filtration chamber (412), and closed when the respective filtration member (422,436) is installed in the filtration chamber (412).

3. The rotisserie oven (320) as recited in claim 1, further comprising a fan (450) drawing incoming air through the at least one filtration member (422,436).

4. The rotisserie oven (320) as recited in claim 3, further comprising a controller (407) that prevents at least one of the fan (450) and the heating system (364) from operating when the switch (458,466) is open.

5. The rotisserie oven (320) as recited in claim 4, further comprising an airflow sensor (419) positioned proximal the hood outlet (456) and coupled to the controller (407), wherein the controller (407) prevents at least one of the fan (450) and heating system (364) from operating when the sensor (419) indicates an exhaust airflow rate below a predetermined threshold.

6. The rotisserie oven (320) as recited in claim 1, wherein the downstream filtration member (436) includes a charcoal filtration media (441).

7. The rotisserie oven (320) as recited in claim 1, wherein the upstream filtration member (422) is configured to remove grease from the grease-laden air.

8. The rotisserie oven (320) as recited in claim 7, wherein the upstream filtration member (422) comprises a baffle filter.

9. The rotisserie oven (320) as recited in claim 1, further comprising a latch (382) that interferes with the door assembly (338) and permits the door assembly (338) to be no more than partially opened for a predetermined period of time.

10. The rotisserie oven (320) as recited in claim 9, wherein the interference between the latch (382) and the door assembly (338) is removed upon expiration of the predetermined period of time.

11. The rotisserie oven (320) as recited in claim 1, further comprising a convection heating system (366) introducing heat into the cooking chamber (334) simultaneously with the radiating heat produced by the radiating heating system (364).

12. A method of operating a rotisserie oven (320) of the type A) a cooking chamber (334) defined by side walls (328,330,332) joined at their upper and lower ends to upper and lower walls (324,326), the chamber (334) defining at least one open end closed by a movable door assembly (338), B) a radiating heating system (364) disposed in the cooking chamber (334) that receives electricity and produces radiating heat, and C) a spit assembly (352) including at least one spit configured to support a food product, the steps comprising:
(A) applying the radiating heat to cook the food product and produce grease-laden air;
(B) drawing the grease-laden air from the cooking chamber (334) into a filtration chamber (412) of a hood (400) that is supported by the cooking chamber (334);
(C) operating an air mover (450) to force the grease-laden air through an upstream filter (422) and a downstream filter (436) that are disposed in the filtration chamber (412); and
(D) exhausting the filtered air from the filtration chamber (412) into an ambient environment.

13. The method as recited in claim 12, further comprising sensing whether at least one of the upstream filter (422) and the downstream filter (436) is installed in the filtration chamber (412).

14. The method as recited in claim 13, further comprising the step of disengaging the air mover (450) when at least one of the upstream filter (422) and the downstream filter (436) is not installed in the filtration chamber (412).

15. The method as recited in claim 13, further comprising performing step (C) only when at least one of the upstream filter (422) and the downstream filter (436) is installed in the filtration chamber (412).

16. The method as recited in claim 13, further comprising activating a switch (458,466) with at least one of the upstream filter (422) and the downstream filter (436) when the at least one of the upstream filter (422) and the downstream filter (436) is installed in the filtration chamber (412).

17. The method as recited in claim 12, further comprising sending a flow rate of the exhausted air, and permitting operation of at least one the heating element (364) and the air mover (450) when the senses flow rate reaches a predetermined minimum.

18. The method as recited in claim 12, further comprising allowing the door assembly (338) to only partially open for a predetermined period of time.

19. The method as recited in claim 18, further comprising allowing the door assembly (338) to fully open upon expiration of the period of time.

20. The method as recited in claim 12, further comprising cooking the food product via convection simultaneously with the radiated heat.
